# EUROPÄISCHE PATENTSCHRIFT

(11) **EP 3 478 555 B1**
(45) Veröffentlichungstag und Bekanntmachung des Hinweises auf die Patenterteilung: **31.08.2022**
(21) Anmeldenummer: 17735490.9
(22) Anmeldetag: 04.07.2017
(51) Int. Cl.: B62B 5/00, B62B 5/06

(54) **TRANSPORTVORRICHTUNG FÜR MÖBEL**
TRANSPORT DEVICE FOR FURNITURE
DISPOSITIF DE TRANSPORT POUR MEUBLES

(30) Priorität: 04.07.2016 DE 102016112189
(43) Veröffentlichungstag der Anmeldung: 08.05.2019
(73) Patentinhaber: Wolfcraft GmbH, 56746 Kempenich (DE)
(72) Erfinder: ZIMMER, Jürgen, 56077 Koblenz (DE)
(74) Vertreter: Grundmann, Dirk
(86) Internationale Anmeldenummer: PCT/EP2017/066548
(87) Internationale Veröffentlichungsnummer: WO 2018/007343

(56) Entgegenhaltungen:
- EP-A2- 2 042 403
- WO-A1-99/21459
- DE-U1-202004 013 898
- US-A- 1 549 879
- US-A- 5 263 668
- US-B1- 6 550 794

## Beschreibung

### Gebiet der Technik

Die Erfindung betrifft eine Transportvorrichtung für Möbel mit mindestens zwei gleich gestalteten Transportelementen, die jeweils eine von zumindest zwei, bevorzugt drei oder vier Laufgliedern getragene rechteckige Tragplatte aufweisen, wobei die sich paarweise gegenüberliegenden Ränder der Tragplatte Kupplungsvorsprünge und Kupplungsausnehmungen aufweisen, die bei einer Verbindung zweier Transportelemente formschlüssig ineinander greifen.

### Stand der Technik

Derartige Transportvorrichtungen sind im Stand der Technik bekannt. Mehrere einzelne, kleine Transportelemente mit rechteckigem Grundriss können durch Kombination zu einem Verbund kombiniert werden, so dass eine große Transportfläche entsteht. Die Kupplungselemente greifen bei der auf dem Markt bekannten Transportvorrichtungen formschlüssig ineinander.

Transportvorrichtungen in Form von Möbelhunden sind auch bekannt aus den US 7,275,752 B2, DE 33 01 360 A1, DE 30 40 671 A1, DE 295 15 234 U1 und DE 20 2014 009 821 U1 bekannt.

Aus der EP 2 042 403 A2 ist eine Transportvorrichtung bekannt, bei der zwei von Rollen getragenen Tragplatten mit einem Schwenkbügel miteinander verbunden werden können.

### Zusammenfassung der Erfindung

Der Erfindung liegt die Aufgabe zugrunde, eine gattungsgemäße Transportvorrichtung gebrauchsvorteilhaft weiterzubilden.

Gelöst wird die Aufgabe durch die in den Ansprüchen angegebene Erfindung, wobei die Unteransprüche nicht nur vorteilhafte Weiterbildungen der im Hauptanspruch angegebenen Transportvorrichtung sind, sondern auch eigenständige Lösungen der Aufgabe darstellen.

Die erfindungsgemäße Transportvorrichtung besteht aus zumindest zwei Transportelementen. Jedes Transportelement besitzt zumindest zwei, bevorzugt aber eine ausreichende Anzahl von Laufgliedern, so dass es eine standstabile Tragplatte aufweist. Es ist vorgesehen, dass die Tragplatten an zwei aneinander grenzenden Randkanten Kupplungsvorsprünge aufweisen. Die beiden Randkanten können unter Ausbildung eines rechten Winkels aneinander angrenzen. Die Kupplungsausnehmungen bzw. die ihnen zugeordneten Kupplungsvorsprünge sind derart an den Rändern des Transportelementes angeordnet sein, dass zwei oder mehrere Transportelemente lediglich durch eine Horizontalverlagerung in eine Kupplungsstellung gebracht werden können. Ein Anheben oder ein Absenken der Transportelemente oder der Tragplatte ist somit nicht erforderlich, um zwei oder mehr Transportelemente zu einem Verbund miteinander zu verbinden. Eine verbesserte Fesselung zweier benachbarter Transportelemente aneinander erfolgt mittels Verbindungsgliedern. Es ist insbesondere vorgesehen, dass die Kupplungsvorsprünge Zähne ausbilden. Die Zähne können schräg verlaufende Zahnflanken ausbilden. Die Kupplungsausnehmungen bilden den Zähnen formangepasste Zahnlücken, deren Flanken ebenfalls schräg verlaufen können. Die Zahnlücken und die Zähne können somit kongruente trapezförmige Grundrisse aufweisen. In einer bevorzugten Ausgestaltung ist vorgesehen, dass die Kupplungsausnehmungen bzw. die Kupplungsvorsprünge sowohl bezogen auf die Schmalränder als auch bezogen auf die Längsränder klappsymmetrisch zu einer Symmetrieebene angeordnet sind, wobei die Symmetrieebene bevorzugt durch die Mitten der sich gegenüberliegenden Schmalränder bzw. die Mitten der sich gegenüberliegenden Längsränder verlaufen. Es ist insbesondere vorgesehen, dass im Mittenbereich eines Schmalrandes oder im Mittenbereich eines Längsrandes jeweils eine Kupplungsausnehmung bzw. ein Kupplungsvorsprung angeordnet ist und diesem mittigen Vorsprung bzw. dieser mittigen Ausnehmung jeweils auf beiden Seiten eine Kupplungsausnehmung bzw. ein Kupplungsvorsprung benachbart ist. Es kann auch vorgesehen sein, dass sich Kupplungsausnehmungen bis in die Eckbereiche bzw. Kupplungsvorsprünge bis in die Eckbereiche erstrecken. Die Kupplungsvorsprünge bzw. Kupplungsausnehmungen sind bevorzugt so angeordnet, dass sich die Längsseiten zweier Transportelemente derart aneinander koppeln können, dass die jeweiligen Kupplungsvorsprünge in die jeweiligen Kupplungsausnehmungen eingreifen. Zwei Transportelemente können derart kombiniert werden, dass ihre beiden Längsränder bzw. Schmalränder nebeneinander liegen, so dass die Kupplungsvorsprünge des einen Längsrandes bzw. Schmalrandes in die Kupplungsausnehmungen des anderen Längsrandes bzw. Schmalrandes eingreifen. Die Zuordnung mehrerer Transportelemente kann derart erfolgen, dass zwei oder mehrere miteinander verbundene Transportelemente nicht versetzt zueinander angeordnet sind. Es ist aber auch vorgesehen, dass mehrere Transportelemente versetzt zueinander miteinander verbunden werden können. Hierzu ist es von Vorteil, wenn die im Eckbereich angeordneten Kupplungsausnehmungen in der Erstreckungsrichtung des jeweiligen Randes lediglich halb so lang sind, wie die mittigen Kupplungsvorsprünge des gegenüberliegenden Randes. Die in Richtung des jeweiligen Randes gemessene Länge eines im Eckbereich angeordneten Kupplungsvorsprungs kann wiederum halb so lang sein, wie die Länge einer mittleren Kupplungsausnehmung auf der Seite des gegenüberliegenden Randes. Bei einer versetzten Anordnung mehrerer, insbesondere mindestens drei Transportelemente verlaufen die Fugen zwischen aneinander angrenzenden Schmalrändern und zwischen aneinander angrenzenden Längsrändern T-förmig. Zur Verbindung zweier miteinander zu verbindenden Transportelemente werden bevorzugt Verbindungsglieder bspw. in Form von Metallplatten oder Metallwinkeln verwendet, die an Befestigungspunkten Schraubendurchtrittsöffnungen aufweisen. Mit diesen Verbindungsgliedern können zwei nebeneinander liegende Transportelemente derart miteinander verbunden werden, dass die jeweiligen Kupplungsvorsprünge in die ihnen gegenüberliegenden Kupplungsausnehmungen eingreifen. Durch die Öffnung der Verbindungsglieder werden Gewindeschäfte hindurchgesteckt, auf welche Fesselungselemente in Form von Muttern aufgeschraubt werden können. Bei den Verbindungsgliedern handelt es sich um langgestreckte Körper. Sie werden an der Unterseite der Tragplatten befestigt. Die Transportelemente können nicht nur in einem nicht miteinander verbundenen Zustand, sondern auch in einem miteinander verbundenen Zustand als Transportmittel für Möbel oder dergleichen verwendet werden. Eine Transportfläche lässt sich durch die Kombination mehrerer miteinander verbundener Transportelemente vergrößern. Hierzu sind die erfindungsgemäßen Verbindungsglieder vorgesehen, mit denen die Tragplatten mindestens zweier Transportelemente miteinander verbunden werden können. Zwei Transportelemente können nebeneinander liegend miteinander verbunden werden. Dabei können insbesondere zwei parallel zueinander verlaufende Längsränder nebeneinander liegen. Eine derartige Parallelanordnung kann durch die Verwendung der Verbindungsglieder erreicht werden. Die Verbindungsglieder können Profilelemente sein. Das Verbindungselement kann eine L-Schiene oder eine Flachschiene sein. Es kann aber auch ein anders gestalteter Profilkörper sein. Das Verbindungselement besitzt bevorzugt zwei voneinander beabstandete Befestigungspunkte, an denen es an Befestigungsstellen an der Transportplatte befestigt werden kann. Die Transportplatte kann insbesondere an einer ihrer Schmalränder zwei Befestigungsstellen aufweisen, an denen das Verbindungsglied in einer Verwahrstellung befestigt ist. Das Verbindungsglied hat dann bevorzugt eine Länge, die kürzer ist als die Länge des Schmalrandes der Tragplatte. Mit dem Verbindungsglied können aber auch zwei Tragplatten in unterschiedlicher Weise miteinander verbunden werden. Beispielsweise können zwei Tragplatten in der Parallelanordnung dadurch miteinander verbunden werden, dass die Verbindungsglieder sich an den voneinander wegweisenden Schmalrändern befinden. Die Längsränder der beiden Transportplatten liegen in berührender Anlage. Die Verlängerungen der Längsränder können von den Verbindungsgliedern gekreuzt werden, deren Befestigungspunkte an jeweils einer Befestigungsstelle befestigt sind, die zu einer der beiden Tragplatten gehört. In der Parallelanordnung können die Verbindungsglieder insbesondere vor Kopf der Tragplatten liegen. Es können weitere Befestigungsstellen vorgesehen sein, die sich in der Nähe der Längsränder befinden. Die Befestigung des Verbindungsgliedes am Befestigungspunkt mit der Befestigungsstelle der Tragplatte erfolgt bevorzugt über eine Befestigungsschraube, deren Achse senkrecht zur Breitseitenfläche verläuft. Es ist bevorzugt ein Griffbügel vorgesehen. Der Griffbügel besitzt zwei Einsteckabschnitte, die parallel zueinander verlaufen und die in Einstecköffnungen der Tragplatte eingesteckt werden können. Der Griffbügel kann mittels Befestigungselementen mit der Tragplatte verbunden sein. Es ist insbesondere vorgesehen, dass durch eine Befestigungsöffnung der Tragplatte zusätzlich zu den Einsteckabschnitten, bspw. parallel zu den Einsteckabschnitten Schraubverbindungselemente hindurchragen, die bspw. von Gewindeschäften ausgebildet sind, auf denen eine Mutter aufgeschraubt werden kann. Es ist aber auch vorgesehen, an den Enden der Endabschnitte der Griffbügel Gewindeabschnitte anzuordnen, auf die Befestigungsmuttern aufgeschraubt werden können. Es ist ferner vorgesehen, dass auf der Unterseite der Tragplatte Befestigungsriegel vorgesehen sind, die die Griffbügel an der Tragplatte fesseln. Die Einsteckabschnitte sind bevorzugt Endabschnitte von zwei parallel zueinander verlaufenden Griffbügeln. Die Griffbügel können mit einem Steg miteinander verbunden sein. Der Steg bildet auch einen Tiefenanschlag zum tiefenbegrenzten Einstecken der Einsteckabschnitte des Griffbügels in die Einstecköffnung der Tragplatte. Es sind Einstecköffnungen vorgesehen, die den Schmalrändern benachbart sind. In jeweils eine Einstecköffnung einer der Tragplatten kann ein Endabschnitt des Griffbügels eingesteckt werden, so dass der Griffbügel und insbesondere der Steg des Griffbügels die beiden Tragplatten miteinander verbindet. Die sich gegenüberliegenden Schmalränder der Tragplatten besitzen bevorzugt Einstecköffnungen zum Einstecken der Einsteckabschnitte eines Griffbügels, so dass auf beiden Schmalseiten zweier mit ihren Längsrändern miteinander verbundenen Tragplatten jeweils ein Griffbügel angeordnet werden kann. Es bildet sich damit ein zwischen zwei Griffbügeln angeordneter Transportraum aus, in dem zu transportierende Gegenstände, beispielsweise Brennholz, gestapelt werden kann, das mittels der Transportvorrichtung transportiert werden kann, wobei die gesamte Transportvorrichtung dann mehr als vier Laufglieder aufweisen kann. Zwei Laufgliedern befinden sich jeweils benachbart zu den voneinander wegweisenden Längsrändern und zwei Laufgliedern befinden sich jeweils im Bereich zweier aneinander grenzender Längsränder. Eine der beiden Tragplatten kann zwei Einstecköffnungen besitzen, die auf Ihrer Längsmittelebene liegen. In diese Einstecköffnungen können die beiden Endabschnitte des Griffbügels eingesteckt werden. Der Griffbügel erstreckt sich dann parallel zur Längsmittellinie, also parallel zu den beiden Längsrändern. Bei zwei aneinander gekoppelten Transportplatten kann eine derartige Griffanordnung zum Transportieren von Platten verwendet werden. Dies ist insbesondere dann von Vorteil, wenn die beiden Transportelemente in der Parallelanordnung miteinander verbunden sind. Das andere Transportelement besitzt Einstecköffnungen, die einem Längsrand benachbart sind und in die Anschlagelemente, beispielsweise Anschlagstifte, eingesetzt werden können, an denen sich die in dieser Konfiguration transportierten Platten abstützen können. Die Anschlagelemente und die Enden der Griffbügel besitzen bevorzugt zylindrische Einsteckabschnitte mit identischen Durchmessern, so dass dieselben kreisrunden Einstecköffnungen verwendet werden können.

Die Tragplatten besitzen darüber hinaus bevorzugt eine Grifföffnung. Es sind bevorzugt erste Kupplungselemente vorgesehen, die an ersten Rändern angeordnet sind, wobei zwei erste Ränder senkrecht zueinander stehen. Jeweils einem ersten Rand liegt bevorzugt jeweils ein zweiter Rand gegenüber, der die zweiten Kupplungsglieder aufweist, die mit den ersten Kupplungsgliedern in einen Formschlusseingriff bringbar sind. Die Transportvorrichtung besteht bevorzugt aus zwei miteinander verbundenen Tragplatten, die jeweils standstabil von Laufgliedern getragen werden. Die Längsränder der Tragplatten sind bevorzugt mindestens doppelt so lang wie die Schmalränder. Es ist bevorzugt vorgesehen, dass eine Transportvorrichtung lediglich aus einer Tragplatte mit vier Laufgliedern besteht. Die Schmalränder dieser Tragplatten sind bevorzugt länger ausgebildet, so dass der Quotient zwischen Länge des Längsrandes und Länge des Schmalrandes kleiner als 2 ist. Auf der Breitseite der Tragplatte, die im Gebrauch nach oben weist, können darüber hinaus Rutschsicherungselemente angebracht sein. Es kann sich dabei um reibungserhöht ausgebildete Flächenabschnitte handeln. Die Laufglieder sind bevorzugt Laufrollen, die um eine parallel zur Flächennormalen der Unterseite der Tragplatte verlaufende Drehachse drehbar sind.

### Kurze Beschreibung der Zeichnungen

Im Folgenden wird die Erfindung anhand von Ausführungsbeispielen näher erläutert. Es zeigen:
- Fig. 1: ein Ausführungsbeispiel eines Transportelementes 1 in einer perspektivischen Darstellung,
- Fig. 2: das Transportelement gemäß Figur 1 in einer Draufsicht,
- Fig. 3: den Schnitt gemäß der Linie III - III in Figur 1,
- Fig. 4: eine perspektivische Darstellung zweier Transportelemente 1 gemäß Figur 1, die zu einem Plattenwagen miteinander verbunden sind,
- Fig. 5: die Detailansicht in Figur 4,
- Fig. 6: einen Schnitt gemäß der Linie VI -VI in Figur 5,
- Fig. 7: eine Unterseitendarstellung dreier mittels Verbindungsgliedern 4 miteinander verbundener Transportelemente gemäß Figur 1,
- Fig. 8: in einer perspektivischen Darstellung vier zu einem Flachwagen zusammengekoppelte Transportelemente 1,
- Fig. 9: eine perspektivische Unteransicht der in der Figur 8 dargestellten Vorrichtung, und
- Fig. 10: eine Unteransicht auf ein Transportelement 1, wobei die Verbindungselemente 10 in einer Verwahrstellung angeordnet sind.

### Beschreibung der Ausführungsformen

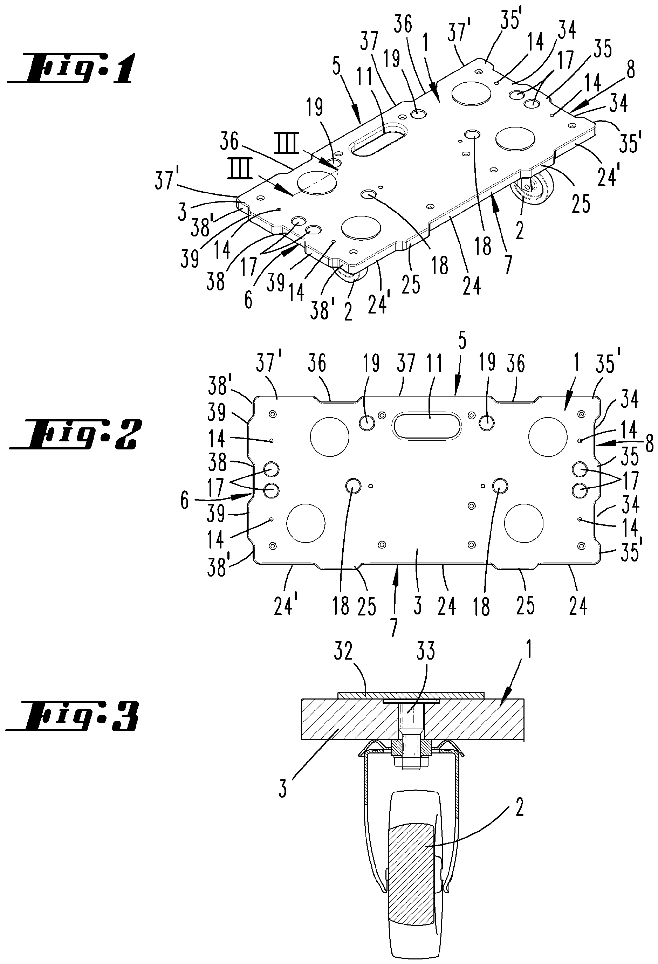

Die Figuren 1 bis 10 zeigen ein Ausführungsbeispiel eines Transportelementes 1, welches sowohl einzeln, einzeln mit einem Griffbügel 10, einzeln mit einem Griffbügel 10 und Anschlagelementen 20, zu zwei Transportelementen 1 zusammengekoppelt, wobei die Transportelemente 1 mit ihren Schmalrändern 6, 8 aneinander gekoppelt sind, wobei die Transportelemente mit ihren Längsrändern 5, 7 aneinander gekoppelt sind, wobei die mit ihren Schmalrändern 6, 8 oder Längsrändern 5, 7 aneinander gekoppelt sind mit einem Griffbügel 10 und/oder Anschlagelementen 20 versehen sind oder wobei drei Transportelemente 1 derart aneinander gekoppelt sind, dass die Transportelemente 1 versetzt zueinander liegen oder wobei vier Transportelemente 1 derart zusammengekoppelt sind, dass sich eine große rechteckige Grundfläche ausbildet, verwendet werden kann.

Das Transportelement 1 besitzt eine aus Holz oder einem anderen geeigneten Werkstoff bestehende Tragplatte 3 und besitzt auf ihrer nach unten weisenden Breitseite 4 Laufglieder 2, wobei die um eine Achse drehbaren Laufglieder 2 Laufrollen sind und mit einer Schraube 33 an der Tragplatte 3 befestigt sind, wobei die Schraube 33 eine Öffnung der Tragplatte 3 durchragt, oberhalb der ein Gummiflecken 32 angeordnet ist zur Reibverminderung.

Das Transportelement 1 bzw. dessen Tragplatte 3 besitzt vier senkrecht zueinander stehende Ränder. Zwei Längsränder 5, 7 liegen sich gegenüber. Zwei Schmalränder 6, 8 liegen sich gegenüber. Es gibt vier Eckbereiche, in denen jeweils ein Längsrand und ein Schmalrand rechtwinklig aneinander grenzen.

Die sich gegenüberliegenden Längs- oder Schmalränder 5 bis 8 besitzen Kupplungsvorsprünge 25, 35, 35', 37, 37', 39 und Kupplungsausnehmungen 24, 24', 34, 36, 38 und 38', wobei die Kupplungsvorsprünge 35, 35' eines Schmalrandes 8 in Kupplungsausnehmungen 38, 38' des gegenüberliegenden Schmalrandes 6 und die Kupplungsvorsprünge 39 des Schmalrandes 6 in die Kupplungsausnehmungen 34 des gegenüberliegenden Schmalrandes 8 formschlüssig eintauchen können, indem zwei benachbarte Transportelemente 1 in Horizontalrichtung gegeneinander verlagert werden können. Die Kupplungsvorsprünge 25 eines Längsrandes 7 können in die Kupplungsausnehmungen 36 des gegenüberliegenden Längsrandes 5 eintauchen. Dessen Kupplungsvorsprünge 37, 37' können in die Kupplungsausnehmungen 24, 24' des gegenüberliegenden Längsrandes 7 eintauchen, wobei auch hier die Kupplungsvorsprünge formschlüssig in den Kupplungsausnehmungen einliegen.

Die Kupplungsvorsprünge 25, 35, 35', 37, 37', 39 sind zahnartig ausgebildet und besitzen parallel zu den Rändern 5, 6, 7, 8 verlaufende Kopfflanken und schräg dazu verlaufende Seitenflanken. Die Kupplungsvorsprünge bzw. die Kupplungsausnehmungen besitzen somit einen im Wesentlichen trapezförmigen Grundriss.

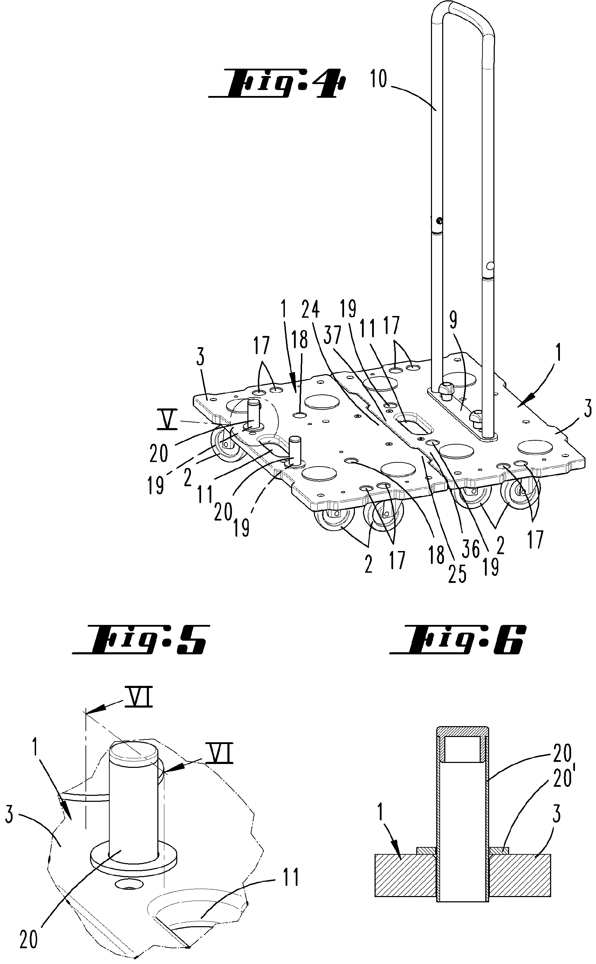

Die Figur 4 zeigt, wie zwei Transportelemente 1 unter Ausbildung einer vergrößerten rechteckigen Grundfläche durch Aneinanderlegen zweier Längsränder 5, 7 miteinander verbunden werden. Es ist aber auch möglich, zwei Transportelemente 1 mit ihren Schmalrändern 6, 8 miteinander zu koppeln, so dass sich eine längliche, quadratische Transportfläche ausbildet. In dieser Konfiguration greift bevorzugt ein Kupplungsvorsprung 25 in exakt eine ihr gegenüberliegende Kupplungsausnehmung 36 ein.

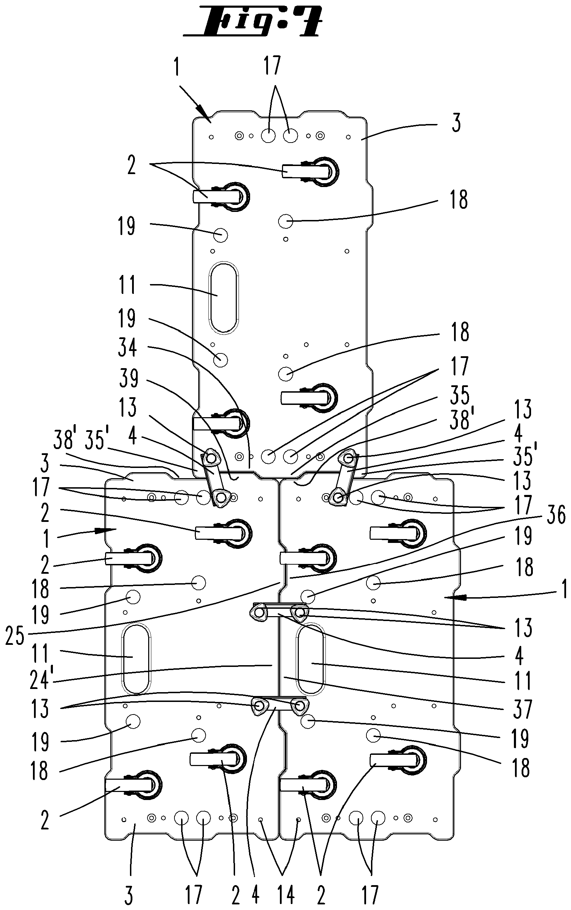

Die Figur 7 zeigt eine Variante. Zwei Transportelemente 1 sind mit ihren Längsrändern 5, 7 aneinander gekoppelt, so dass die im Eckbereich angeordneten Kupplungsausnehmungen 38' eine gemeinschaftliche Kupplungsausnehmung ausbilden zur Aufnahme eines mittigen Kupplungsvorsprungs 35 eines dritten Transportelementes 1, welches mittels Verbindungsgliedern 4 jeweils mit einem der beiden ersten Transportelemente verbunden ist. Auch die mit ihren Längsrändern 5, 7 miteinander verbundenen Transportelemente 1 sind mittels Verbindungsgliedern 4 miteinander verbunden, wobei die Verbindungsglieder 4 Winkelstahlbleche sind, die an ihren beiden Enden Befestigungsöffnungen aufweisen, durch die Gewindeschäfte hindurchragen, auf die Befestigungsmuttern 13 aufgeschraubt sind.

Um die in der Figur 7 dargestellte versetzte Anordnung von Transportelementen 1 zu ermöglichen, sind die Kupplungsausnehmungen 24, 24', 34, 36, 38 und 38' und die Kupplungsvorsprünge 25, 35, 35', 37, 37', 39 spiegelsymmetrisch angeordnet, wobei die Spiegelebenen jeweils mittig durch die Längsränder 5, 7 bzw. Schmalränder 6, 8 verlaufen. Die im Eckbereich angeordneten Kupplungsvorsprünge 35', 37' haben - bezogen auf die Erstreckungsrichtung des jeweiligen Randes - eine Länge, die halb so lang ist, wie die auf dem gegenüberliegenden Rand mittig angeordnete Kupplungsausnehmungen 24 bzw. 38.

Auch die in den Eckbereichen angeordneten Kupplungsausnehmungen 38', 24' sind in Erstreckungsrichtung des jeweiligen Randes halb so lang, wie die dem gegenüberliegenden Rand mittig zugeordneten Kupplungsvorsprünge 25, 37. Bei der in Figur 7 dargestellten Konfiguration greift ein Kupplungsvorsprung 35 in zwei im Eckbereich angeordnete Kupplungsausnehmungen 38' ein. In einer nicht dargestellten Konfiguration können zwei Kupplungsvorsprünge 35' in eine Kupplungsausnehmung 38 eingreifen. In dem Bereich, wo drei Transportelemente 1 aneinanderstoßen, verlaufen die Trennfugen zwischen den Rändern der Tragplatten 3 T-förmig.

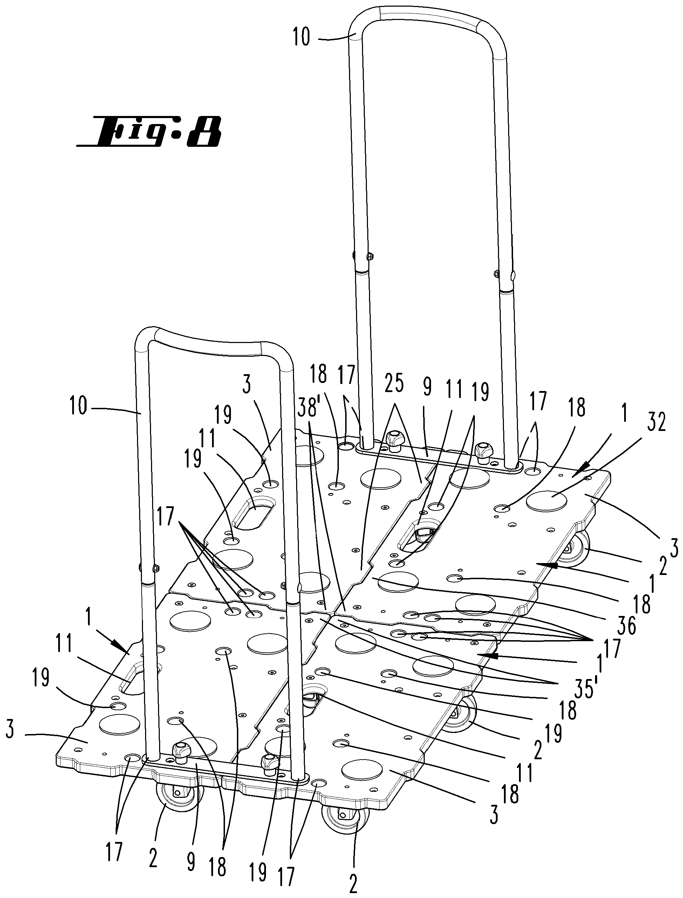

Die Figur 8 zeigt vier miteinander verbundene Tragelemente 1, wobei Ecken der Tragelemente 1 in einem Mittelpunkt zusammenstoßen, wo Kupplungsvorsprünge 35' in gegenüberliegenden Kupplungsausnehmungen 38' bzw. Kupplungsvorsprünge 37' in Kupplungsausnehmungen 24' eingreifen. Dort stoßen in einem Verbindungspunkt vier Transportelemente bzw. Tragplatten 3 aneinander, so dass die Fugen dort im Wesentlichen kreuzförmig verlaufen.

Die - bezogen auf die Figuren 4 bis 8 - beschriebenen Kupplungsausnehmungen bzw. Kupplungsvorsprünge sind in der Lage, die miteinander verbundenen Transportelemente hinsichtlich einer Längsverschiebung aneinander zu fesseln, nicht jedoch hinsichtlich eines voneinander Entfernens. Hierzu werden die beschriebenen Verbindungsglieder 4 verwendet.

Die Tragplatte 3 besitzt eine Grifföffnung 11, die sich parallel zur Randkante 5 erstreckt. Die Grifföffnung 11 liegt zwischen zwei Einstecköffnungen 19, in die die Anschlagelemente 20 eingesteckt werden können. In derartige Einstecköffnungen 19 könnte aber auch ein Einsteckende eines Griffbügels 10 eingesteckt werden.

Auf der Längsmittellinie, die sich parallel zu den Längsrändern 5 und 7 erstreckt, befinden sich Einstecköffnungen 18 zum Einstecken der Einsteckenden des Griffbügels 10. Ein die Griffschenkel miteinander verbindender Steg 9 liegt dabei auf der nach oben weisenden Breitseitenfläche der Tragplatte 3 auf. Mittels Befestigungsschrauben kann der Steg 9 auf der Breitseitenfläche befestigt werden. Die Figur 4 zeigt eine Kombination der Elemente der Transportvorrichtung dieser Art.

An den beiden Schmalseiten 6, 8 sind Einstecköffnungen 17 vorgesehen, die ebenfalls zum Einstecken der Einsteckenden des Griffbügels 10 vorgesehen sind. Diese Öffnungen 17 werden insbesondere dann zum Einstecken eines Einsteckendes eines Griffschenkels verwendet, wenn zwei Transportelemente 1 mit ihren Längsrändern 7, 5 nebeneinander angeordnet sind. Der Steg 9 kreuzt dabei die Trennfuge zwischen zwei Transportelementen und ist mit einem Befestigungselement an jeweils einer der beiden Tragplatten 3 befestigt, so dass der Steg 9 ein ergänzendes Verbindungsglied ausbildet, um die beiden benachbarten Transportelemente 1 miteinander zu verbinden.

Ein Anwendungsbeispiel einer derartigen Griffbügelanordnung zeigt die Figur 8. Hier sind vier Transportelemente 1 zur Ausbildung einer großen rechteckigen Transportfläche miteinander verbunden.

In einer Variante der in der Figur 4 dargestellten Kombination der Elemente der Transportvorrichtung lassen sich die Anschläge 20 auch in die Einstecköffnungen 19 derselben Tragplatte 3 einstecken, an der auch der Griffbügel 10 befestigt ist. Das Transportelement kann dann einzeln verwendet werden. Die im Ausführungsbeispiel kreiszylindrischen Anschläge 20 stützen sich mit einer Scheibe 20' auf der Oberseite der Tragplatte 3 ab.

Zur Befestigung des Steges 9 bzw. der Verbindungsglieder 4 können Gewindeschäfte verwendet werden, die an Befestigungsstellen 14 an der Tragplatte 3 befestigt sind. Die Gewindeschäfte können dabei in Öffnungen stecken. Auf die Gewindeabschnitte können Knebelmuttern aufgeschraubt werden.

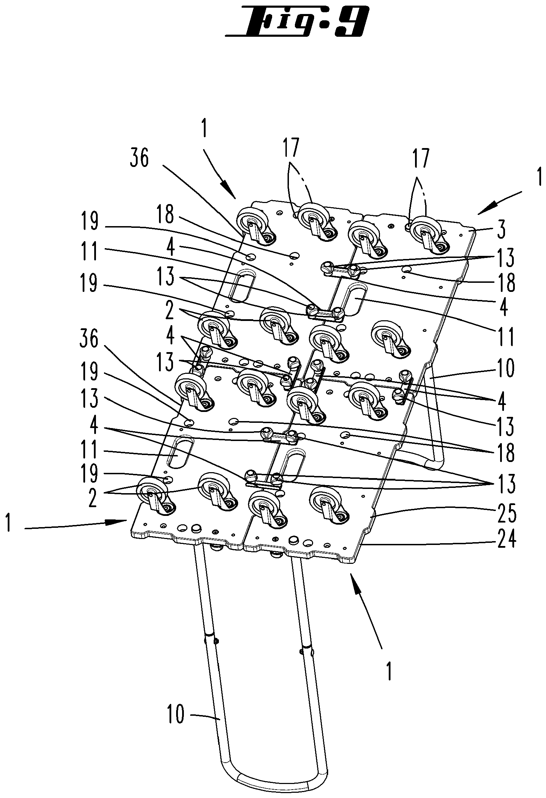

Die Figur 9 zeigt, dass aneinander angrenzende Tragplatten 3 jeweils mit zwei länglichen Verbindungsgliedern 4 miteinander verbunden sind.

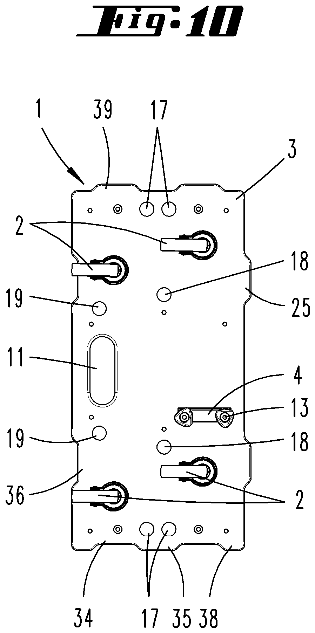

Die Figur 10 zeigt die Unteransicht eines Transportelementes 1 mit Blick auf die Unterseite der Tragplatte 3, an der mittels zwei Befestigungselementen 13 ein Verbindungsglied 4 in einer Verwahrstellung gehalten wird. Gewindeschäfte durchgreifen hierbei die Befestigungsöffnungen des Verbindungsgliedes.

## Patentansprüche

1. Transportvorrichtung, insbesondere für Möbel mit mindestens zwei gleich gestalteten Transportelementen (1), die jeweils eine von zumindest zwei, bevorzugt drei oder vier Laufgliedern (2) getragene rechteckige Tragplatte (3) aufweisen, wobei die sich paarweise gegenüberliegenden Ränder (5, 6, 7, 8) der Tragplatte (3) Kupplungsvorsprünge (25, 35, 35', 37, 37', 39) und Kupplungsausnehmungen (24, 24', 34, 36, 38, 38') aufweisen, die bei einer Verbindung zweier Transportelemente (1) formschlüssig ineinander greifen, wobei die Kupplungsvorsprünge (25, 35, 35', 37, 37', 39) sich in der Erstreckungsebene der Tragplatte (3) erstreckende Zähne sind, die durch eine ledigliche Horizontalverlagerung mindestens zweier Transportelemente (1) relativ zueinander in die von den Kupplungsausnehmungen (24, 24', 34, 36, 38, 38') ausgebildete, in der Erstreckungsebene der Tragplatte (3) sich erstreckende Zahnlücken eingreifen und wobei die beiden Transportelemente (1) mittels Verbindungsgliedern (4) aneinander befestigt sind, wobei die Verbindungsglieder (4) an zwei voneinander beabstandeten Befestigungspunkten (15) Befestigungsöffnungen aufweisen, die an Befestigungsstellen (14, 14', 16) an einer der beiden Tragplatten (3) befestigbar sind, **dadurch gekennzeichnet, dass** die Verbindungsglieder (4, 4') längliche Flach- oder Profilkörper sind, die an der Unterseite der Tragplatten (3) befestigt sind.

2. Transportvorrichtung nach Anspruch 1, **dadurch gekennzeichnet, dass** die Kupplungsvorsprünge (25, 35, 35', 37, 37', 39) und die Kupplungsausnehmungen (24, 24', 34, 36, 38, 38') spiegelsymmetrisch betreffend eine durch die Mitte der sich paarweise gegenüberliegenden Ränder (5, 7, 6, 8) gelegte Symmetrieebene sind.

3. Transportvorrichtung nach einem der vorhergehenden Ansprüche, **dadurch gekennzeichnet, dass** an einen Eckbereich angrenzende Kupplungsausnehmungen (38', 24') in der Erstreckungsrichtung des jeweiligen Randes (6, 7) halb so lang sind wie ein in der Mitte des gegenüberliegenden Randes (5, 8) angeordneter Vorsprung (37, 35).

4. Transportvorrichtung nach einem der vorhergehenden Ansprüche, **dadurch gekennzeichnet, dass** an einen Eckbereich angrenzende Kupplungsvorsprünge (35', 37') in Erstreckungsrichtung des jeweiligen Randes (5, 8) halb so lang sind wie die in der Mitte des gegenüberliegenden Randes (7, 6) angeordneten Kupplungsausnehmungen (24, 38).

5. Transportvorrichtung nach einem der vorhergehenden Ansprüche, **dadurch gekennzeichnet, dass** die Verbindungsglieder (4,4') Profilschienen, insbesondere L-Schienen oder flache Streifen sind.

6. Transportvorrichtung nach einem der vorhergehenden Ansprüche, **dadurch gekennzeichnet, dass** durch die Befestigungsöffnung (13) Gewindeschäfte hindurchragen, auf die Befestigungsmuttern (13) aufgeschraubt sind.

7. Transportvorrichtung nach einem der vorhergehenden Ansprüche, **dadurch gekennzeichnet, dass** die Kupplungsvorsprünge (25, 35, 35', 37, 37', 39) und die Kupplungsausnehmungen (24, 24', 34, 36, 38, 38') einen trapezförmigen Grundriss aufweisen.

8. Transportvorrichtung nach einem der vorhergehenden Ansprüche, **gekennzeichnet durch** einen Griffbügel (10) mit im Wesentlichen parallel zueinander verlaufenden Griffschenkeln, deren freie Enden in Einstecköffnungen (17, 18, 19) der Tragplatte (3) einsteckbar sind.

9. Transportvorrichtung nach Anspruch 8, **dadurch gekennzeichnet, dass** ein Paar Einstecköffnungen (18) etwa in der Längsmitte der Tragplatten (3) angeordnet ist zum Einstecken des Griffbügels (10) in einer Erstreckungsrichtung parallel zur Längsmittellinie.

10. Transportvorrichtung nach einem der Ansprüche 8 oder 9, **dadurch gekennzeichnet, dass** die Tragplatte (3) zwei jeweils demselben Längsrand (5) benachbarte Einstecköffnungen (19) aufweist zum Einstecken der Enden des Griffbügels (10) oder von Anschlagelementen (20).

11. Transportvorrichtung nach einem der Ansprüche 8 bis 10, **dadurch gekennzeichnet, dass** jede Tragplatte (3) im Bereich ihres Schmalrandes (6) jeweils eine Öffnung (17) aufweist, in die das Ende eines Griffschenkels des Griffbügels (10) einsteckbar ist.

12. Transportvorrichtung nach einem der Ansprüche 8 bis 11, **dadurch gekennzeichnet, dass** zumindest einer von zwei voneinander beabstandeten Endabschnitte eines Griffbügels (10) oder ein die beiden Endabschnitte des Griffbügels (10) miteinander verbindender Steg (9) mittels Fesselungselementen an der Tragplatte (3) befestigt ist.

13. Transportvorrichtung nach Anspruch 12, **dadurch gekennzeichnet, dass** der Steg (9) auf der nach oben weisenden Breitseitenfläche der Tragplatte (3) befestigt ist.

## Claims

1. Transport device, in particular for furniture, comprising at least two identical transport elements (1), each of which has a rectangular support plate (3) supported by at least two, preferably three or four running members (2), the edges (5, 6, 7, 8) of the support plate (3) which lie opposite one another in pairs having coupling projections (25, 35, 35', 37, 37', 39) and coupling recesses (24, 24', 34, 36, 38, 38') which, when two transport elements (1) are connected, form-fittingly engage in one another, the coupling projections (25, 35, 35', 37, 37', 39) being teeth which extend in the extension plane of the support plate (3) and engage in the tooth gaps that are formed by the coupling recesses (24, 24', 34, 36, 38, 38') and that extend in the extension plane of the support plate (3) by means of a simple horizontal displacement of at least two transport elements (1) relative to one another, and the two transport elements (1) being fastened to one another by means of connecting members (4), the connecting members (4) having fastening openings at two mutually spaced fastening points (15), which openings can be fastened at fastening points (14, 14', 16) on one of the two support plates (3), **characterised in that** the connecting members (4, 4') are elongate flat or profiled bodies which are fastened to the bottom surface of the support plates (3).

2. Transport device according to claim 1, **characterised in that** the coupling projections (25, 35, 35', 37, 37', 39) and the coupling recesses (24, 24', 34, 36, 38, 38') are mirror-symmetrical with respect to a plane of symmetry placed through the centre of the edges (5, 7, 6, 8) which lie opposite one another in pairs.

3. Transport device according to either of the preceding claims, **characterised in that** coupling recesses (38', 24') adjoining a corner region are half as long in the extension direction of the relevant edge (6, 7) as a projection (37, 35) arranged in the centre of the opposite edge (5, 8).

4. Transport device according to any of the preceding claims, **characterised in that** coupling projections (35', 37') adjoining a corner region are half as long in the extension direction of the relevant edge (5, 8) as the coupling recesses (24, 38) arranged in the centre of the opposite edge (7, 6).

5. Transport device according to any of the preceding claims, **characterised in that** the connecting members (4, 4') are profile rails, in particular L rails or flat strips.

6. Transport device according to any of the preceding claims, **characterised in that** threaded shafts onto which fastening nuts (13) are screwed protrude through the fastening opening (13).

7. Transport device according to any of the preceding claims, **characterised in that** the coupling projections (25, 35, 35', 37, 37', 39) and the coupling recesses (24, 24', 34, 36, 38, 38') have a trapezoidal outline.

8. Transport device according to any of the preceding claims, **characterised by** a handle bar (10) having handle legs which extend substantially in parallel with one another, the free ends of which handle legs can be inserted into insertion openings (17, 18, 19) of the support plate (3).

9. Transport device according to claim 8, **characterised in that** a pair of insertion openings (18) is arranged approximately in the longitudinal centre of the support plates (3) for inserting the handle bar (10) in an extension direction in parallel with the longitudinal centre line.

10. Transport device according to either claim 8 or claim 9, **characterised in that** the support plate (3) has two insertion openings (19), which are each adjacent to the same longitudinal edge (5), for inserting the ends of the handle bar (10) or stop elements (20).

11. Transport device according to any of claims 8 to 10, **characterised in that** each support plate (3) has an opening (17) in the region of its narrow edge (6), into which opening the end of a handle leg of the handle bar (10) can be inserted.

12. Transport device according to any of claims 8 to 11, **characterised in that** at least one of two mutually spaced end portions of a handle bar (10) or a connecting piece (9) which connects the two end portions of the handle bar (10) to one another is fastened to the support plate (3) by means of restraining elements.

13. Transport device according to claim 12, **characterised in that** the connecting piece (9) is fastened to the upward-pointing broad lateral face of the support plate (3).

## Revendications

1. Dispositif de transport, en particulier pour des meubles, avec au moins deux éléments de transport (1) de même configuration, qui présentent chacun une plaque de support rectangulaire (3) supportée par au moins deux, de préférence trois ou quatre organes de roulement (2), dans lequel les bords (5, 6, 7, 8) opposés par paires de la plaque de support (3) présentent des saillies d'accouplement (25, 35, 35', 37, 37', 39) et des évidements d'accouplement (24, 24', 34, 36, 38, 38') qui, lors d'une liaison de deux éléments de transport (1), s'engagent les uns dans les autres par complémentarité de forme, dans lequel les saillies d'accouplement (25, 35, 35', 37, 37', 39) sont des dents qui s'étendent dans le plan d'extension de la plaque de support (3), qui, par un simple déplacement horizontal d'au moins deux éléments de transport (1) l'un par rapport à l'autre, s'engagent dans les entre-dents formés par les évidements d'accouplement (24, 24', 34, 36, 38, 38') et s'étendant dans le plan d'extension de la plaque de support (3) et dans lequel les deux éléments de transport (1) sont fixés l'un à l'autre au moyen d'éléments de liaison (4), les éléments de liaison (4) présentant, en deux points de fixation (15) espacés l'un de l'autre, des ouvertures de fixation qui peuvent être fixées à des points de fixation (14, 14', 16) sur l'une des deux plaques de support (3), **caractérisé en ce que** les éléments de liaison (4, 4') sont des corps allongés plats ou profilés qui sont fixés sur la face inférieure des plaques de support (3).

2. Dispositif de transport selon la revendication 1, **caractérisé en ce que** les saillies d'accouplement (25, 35, 35', 37, 37', 39) et les évidements d'accouplement (24, 24', 34, 36, 38, 38') présentent une symétrie spéculaire par rapport à un plan de symétrie passant par le milieu des bords (5, 7, 6, 8) opposés par paires.

3. Dispositif de transport selon l'une des revendications précédentes, **caractérisé en ce que** des évidements d'accouplement (38', 24') adjacents à une zone de coin sont deux fois moins longs, dans la direction d'extension du bord respectif (6, 7), qu'une saillie (37, 35) agencée au milieu du bord opposé (5, 8).

4. Dispositif de transport selon l'une des revendications précédentes, **caractérisé en ce que** des saillies d'accouplement (35', 37') adjacentes à une zone de coin sont deux fois moins longues, dans la direction d'extension du bord respectif (5, 8), que les évidements d'accouplement (24, 38) agencés au milieu du bord opposé (7, 6).

5. Dispositif de transport selon l'une des revendications précédentes, **caractérisé en ce que** les éléments de liaison (4, 4') sont des rails profilés, notamment des rails en L ou des bandes plates.

6. Dispositif de transport selon l'une des revendications précédentes, **caractérisé en ce que** des tiges filetées traversent l'ouverture de fixation (13), sur lesquelles sont vissés des écrous de fixation (13).

7. Dispositif de transport selon l'une des revendications précédentes, **caractérisé en ce que** les saillies d'accouplement (25, 35, 35, 37, 37', 39) et les évidements d'accouplement (24, 24', 34, 36, 38, 38') présentent un tracé de base trapézoïdal.

8. Dispositif de transport selon l'une des revendications précédentes, **caractérisé par** un arceau de préhension (10) comportant des branches sensiblement parallèles entre elles, dont les extrémités libres peuvent être insérées dans des ouvertures d'insertion (17, 18, 19) de la plaque de support (3).

9. Dispositif de transport selon la revendication 8, **caractérisé en ce qu'**une paire d'ouvertures d'enfichage (18) est agencée à peu près au milieu de la longueur des plaques de support (3) pour l'enfichage de l'arceau de préhension (10) dans une direction d'extension parallèle à la ligne médiane longitudinale.

10. Dispositif de transport selon l'une des revendications 8 ou 9, **caractérisé en ce que** la plaque de support (3) présente deux ouvertures d'emboîtement (19) respectivement voisines du même bord longitudinal (5) pour l'insertion des extrémités de l'arceau de préhension (10) ou d'éléments de butée (20) .

11. Dispositif de transport selon l'une des revendications 8 à 10, **caractérisé en ce que** chaque plaque de support (3) présente, dans la zone de son bord étroit (6), une ouverture respective (17) dans laquelle peut être enfichée l'extrémité d'une branche de l'arceau de préhension (10).

12. Dispositif de transport selon l'une des revendications 8 à 11, **caractérisé en ce qu'**au moins l'une de deux parties d'extrémité d'un arceau de préhension (10), espacées l'une de l'autre, ou une barrette (9) reliant ensemble les deux parties d'extrémité de l'arceau de préhension (10) sont fixées à la plaque de support (3) au moyen d'éléments d'attache.

13. Dispositif de transport selon la revendication 12, **caractérisé en ce que** la barrette (9) est fixée sur la face large orientée vers le haut de la plaque de support (3).
